# EUROPEAN PATENT SPECIFICATION

(11) **EP 3 227 070 B1**
(45) Date of publication and mention of the grant of the patent: **30.04.2025**
(21) Application number: 15864799.0
(22) Date of filing: 02.12.2015
(51) Int. Cl.: B23D 47/02, B23D 45/06

(54) **PORTABLE TABLE SAW**
TRAGBARE TISCHSÄGE
SCIE CIRCULAIRE À TABLE PORTATIVE

(30) Priority: 03.12.2014 US 201462086756 P
(43) Date of publication of application: 11.10.2017
(73) Proprietor: Robert Bosch GmbH, 70442 Stuttgart (DE)
(72) Inventor: FROLOV, Andrew, Glenview, IL 60025 (US); KOEGEL, Jan, 72250 Freudenstadt (DE); GALLAGHER, P. Sean, Arlington Heights, IL 60004 (US); VUCKOVIC, Miroslav, Skokie, IL 60076 (US); NEWTON, Robert, Elgin, IL 60124 (US)
(86) International application number: PCT/US2015/063389
(87) International publication number: WO 2016/089973

(56) References cited:
- WO-A1-2005/002813
- US-A1- 2011 011 231
- US-A1- 2011 067 540
- US-A1- 2012 006 170
- US-A1- 2013 081 526
- US-A1- 2013 098 217

## Description

### Reference to Related Application and Priority Claim

This application claims priority to U.S. provisional application No. 62/086,756, filed on December 3, 2014.

### Technical Field

This disclosure relates generally to table saws, and, more particularly, to portable table saws.

### Background

Portable table saws are used to cut a variety of workpieces. In particular, portable table saws are useful at construction jobsites where workers cut and shape a large number of wood products. For example, framers use portable table saws for rough-cutting lumber, while finishing carpenters use portable power saws to make rip and miter cuts in producing precise finishing cuts of trim pieces.

In the construction industry it is commonplace for the workers to transport their table saw and other tools from one construction site to another. In doing so, the table saw may be placed in a transport vehicle, for example a bed of a pickup truck, alongside of other tools. The table saw should be compact so that the table saw does not require large amounts of space in the transport vehicle or in the storage location of the portable saw. Additionally, it is common for the portable table saw to be handled roughly worker during placement of the table saw into the transport vehicle.

During transport, the table saw may move around within the around and collide with the other tools. For example, during transport of the table saw from one location to another, the table saw may slide around in the bed of a pickup truck and collide with the bed walls and/or tailgate of the truck. Such collisions may be detrimental to certain components of the table saw. In particular, the table saw may have controls, actuators, and other components that extend from the front side and back side of the table saw which may be damaged during such collisions.

One such actuator is an actuator for adjusting position of a saw blade of a saw assembly of the table saw. This actuator is configured to adjust the height and bevel angle of the saw blade that is extending through an opening in the top surface of the table saw. Since this actuator typically projects outwardly from the front side of the table saw, it is particularly prone to being damaged due to the table saw sliding within a bed of a pickup truck and colliding with the bed walls and the tailgate. Therefore, one desirable feature of a table saw is durability during loading and transport of the table saw from one job site to another including protecting such table saw controls, actuators, and other similarly situated components.

Once at the jobsite, the workers grasp the table saw by one or more handles to transfer the table saw from the transport vehicle to the location where the saw is to be used. The table saw may be bulky and heavy. Additionally, the table saw may have a concentration of mass due to, for example, the weight of the motor, table top, or other components, at one or more regions of the table saw. These concentrations of mass may cause the table saw to be awkward to carry during transfer. As a result, transferring the table saw between the transport vehicle and the jobsite may be difficult and may require a user to use two hands, or may require more than one person to move the saw. Thus, another desirable feature for a table saw is ease of transfer from the transport vehicle to the jobsite.

The portable table saw may include several accessories to facilitate safety, cutting accuracy, and different cut types. For example, a blade guard, an anti-kickback device, and a push stick are typically included with a table saw. Another accessory that is sometimes included with a table saw is a rip fence that is coupled to rails of the power saw. It may be difficult to keep these accessories in a place where they are easily retrievable and retain the accessories with the table saw so they do not become lost. Another desirable feature of the table saw is therefore to provide convenient stowage capabilities for the accessories and protect them from damage. WO 2005002813 A1 discloses a building saw comprising a stepless, lockable movement device for moving the saw blade in the longitudinal direction of the slot, - the cradle further comprises a stepless, lockable tilting device for giving the saw blade a desired angle relative to a substantially horizontal plane, - the turntable is arranged so that it can be steplessly, lockably adjusted to give the saw blade a desired angle relative to a substantially vertical plane, and - the building saw comprises an operating device for handling all the saw blade's movements with regard to raising, moving, tilting and/or rotating the saw blade. In US 2012 006170 A1 a table saw is disclosed.

### Summary

According to the invention, a portable table saw system having the features of claim 1 is provided.

In some embodiments of the portable table saw system, the first base leg, second base leg, third base leg, first end support, and second end support are all integrally and monolithically formed of a single frame member.

In further embodiments, the single frame member comprises a bent tubular member.

In another embodiment of the portable table saw system, the support arrangement includes an upper support formed integrally and monolithically with the first base leg, second base leg, third base leg, first end support, and second end support. The upper support is fixedly connected to the table top assembly to support the table top assembly.

In one embodiment of the portable table saw system, the base portion further comprises a rod member connecting the first base portion to the second base portion, and a diameter of the rod member is less than a diameter of the single frame member.

In another embodiment, the first end support is arranged in a second plane, which is transverse to the first plane, and the second end support is arranged in a third plane, which is perpendicular to the first plane.

According to the invention, the first end support includes a handle element arranged such that, when the table saw arrangement is situated on the second end support, a vertical axis of a center of mass of the table saw system passes through the handle element.

According to the invention, the base portion further comprises a fourth base leg arranged in a second side region of the table saw system and extending in the first plane in the second direction. The fourth base leg connects the first base leg to the second base leg.

According to the invention, the support assembly further comprises a first junction member connecting the first base leg to the third base leg, a second junction member connecting the first base leg to the fourth base leg, a third junction member connecting the second base leg to the third base leg, and a fourth junction member connecting the second base leg to the fourth base leg. The first, second, third, and fourth junction members extend out of the first plane and define a second plane on which the table saw system is configured to rest.

In another embodiment according to the disclosure, the first end support includes a first end support member in the first side region and a second end support member in the second side region. Each of the first and second end support members connect the first base leg to the table top assembly.

In one embodiment of the portable table saw system, the second end support includes a third end support member in the first side region and a fourth end support member in the second side region. Each of the third and fourth support members connects the second base leg to the table top assembly.

According to the invention, the portable table saw system further comprises a first accessory and a first accessory mount supported by the support assembly and configured to support the first accessory in a stowed state of the table saw system. The first accessory mount is positioned within an internal volume defined by the support assembly and the table top assembly in such a way that the first accessory is located entirely within the internal volume when the first accessory is mounted in the first accessory mount.

In further embodiments, the portable table saw system further comprises a second accessory, a third accessory, a second accessory mount, and a third accessory mount. The second accessory mount is supported by the support assembly and is configured to support the second accessory in the stowed state of the table saw system and the third accessory mount is supported by the support assembly and is configured to support the third accessory in the stowed state of the table saw system. Each of the second and third accessory mounts is positioned within the internal volume in such a way that the second and third accessories are located entirely within the internal volume when the second and third accessories are mounted in the second and third accessory mounts, respectively.

According to the invention, the first accessory includes a rip fence. In another embodiment according to the disclosure, the second accessory includes a saw blade guard, and the third accessory includes a miter gauge.

In some embodiments of the portable table saw system, the support assembly further comprises a front plate member arranged in the first side region, and the front plate member is fixedly connected to the third base leg and to the table top assembly.

In another embodiment, the front plate member includes an outer covering formed of plastic and a reinforcing plate formed of metal.

### Brief Description of the Drawings

FIG. 1 is a front perspective view of a table saw assembly according to the disclosure.
FIG. 2A is a front elevational view of the table saw assembly of FIG. 1 with the accessories attached in an operational position.
FIG. 2B is a front elevational view of the table saw assembly of FIG. 1 with the accessories stowed in a stowed position.
FIG. 3 is a right end elevational view of the table saw assembly of FIG. 1 with the accessories in the stowed position.
FIG. 4 is a left end elevational view of the table saw assembly of FIG. 1 with the accessories in the stowed position.
FIG. 5 is a bottom view of the table saw assembly of FIG. 1 with the accessories in the stowed position.
FIG. 6 is a rear perspective view of the table saw assembly of FIG. 1.
FIG. 7 is a front perspective view of the support arrangement of the table saw assembly of FIG. 1.
FIG. 8 is an end perspective view of a vertical corner junction element of the support arrangement of FIG. 7.
FIG. 9 is a rear perspective view of the table saw assembly of FIG. 1 in a stowed position and turned to rest on the left end for compact storage.
FIG. 10 is a partially exploded side perspective view of a handle grip of the table saw assembly of FIG. 1.
FIG. 11A is a bottom perspective view of a connection arrangement for connecting a frame member to the table top assembly of the table saw arrangement of FIG. 1.
FIG. 11B is a bottom perspective view of another connection arrangement for connecting a frame member to the table top assembly of the table saw arrangement of FIG. 1.
FIG. 11C is a front perspective view of a connection arrangement for connecting a frame member to the table top assembly of the table saw arrangement of FIG. 1.
FIG. 12 is a front perspective view of another embodiment of a table saw assembly according to the disclosure.
FIG. 13 is a front elevational view of the table saw assembly of FIG. 12.
FIG. 14 is a left end elevational view of the table saw assembly of FIG. 12.
FIG. 15 is a rear elevational view of the table saw assembly of FIG. 12.
FIG. 16 is a right end elevational view of the table saw assembly of FIG. 12.
FIG. 17 is a front perspective view of the support arrangement of the table saw assembly of FIG. 12.
FIG. 18 is a side perspective view of a junction foot of the support arrangement of FIG. 17.
FIG. 19A is a front perspective view of the front panel of the table saw arrangement of FIG. 12.
FIG. 19B is a rear perspective view of the front panel of the table saw arrangement of FIG. 12.
FIG. 20 is a rear perspective view of the table saw assembly of FIG. 12 in a stowed position and turned to rest on the left end for compact storage.
FIG. 21 is a front elevational view of a user carrying the table saw assembly of FIG. 12 by the handle.
FIG. 22 is a cross-sectional illustration of various structures that may be used for the frame components in the table saw assemblies of FIGS. 1 or 12.
FIG. 23 is a cross-sectional illustration of various additional structures that may be used for the frame components in the table saw assemblies of FIGS. 1 or 12.
FIG. 24 is a front perspective view of another table saw assembly and frame structure according to the disclosure.
FIG. 25 is an end elevational view of a frame structure for a table saw assembly.
FIG. 26A is a front cross-sectional view of a connection arrangement for connecting a frame component of the table saw assemblies of FIGS. 1, 12, or 25 to the table top assembly.
FIG. 26B is a side cross-sectional view of the connection arrangement of FIG. 26A for connecting a frame component of the table saw assemblies of FIGS. 1, 12, or 25 to the table top assembly.
FIG. 26C is a side perspective view of the frame component of the connection arrangement of FIG. 26A having a flattened portion.
FIG. 27 is a partially exploded side perspective view of another connection arrangement for connecting the frame structure and the table top assembly.
FIG. 28 is a series of side perspective illustrations of different frame components used with the table saw assemblies of FIGS. 1, 12, or 25.
FIG. 29 is a side perspective view of another frame component and connection assembly for use with the table saw assemblies of FIGS. 1, 12, or 25.

### Detailed Description

For the purposes of promoting an understanding of the principles of the embodiments described herein, reference is now made to the drawings and descriptions in the following written specification. No limitation to the scope of the subject matter is intended by the references.

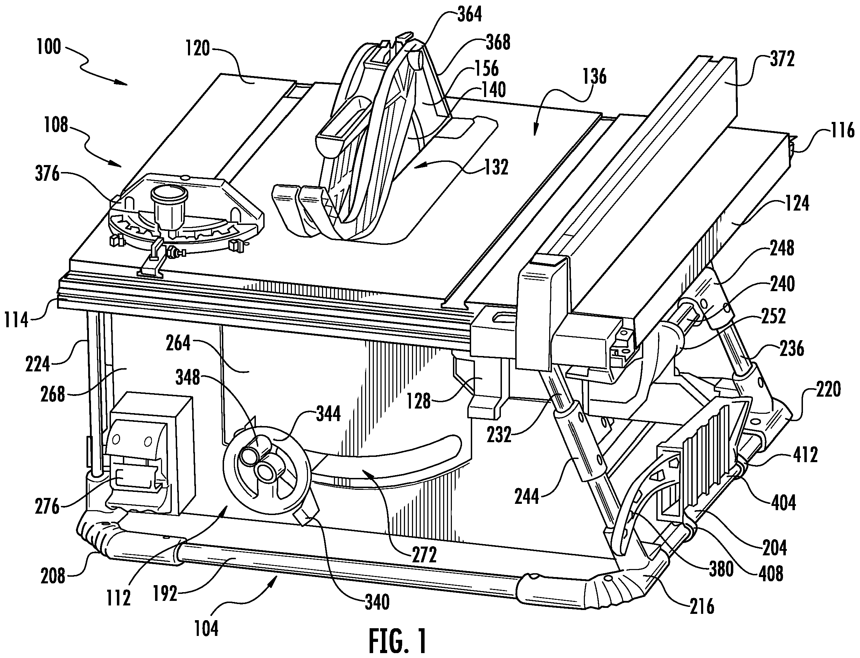

The terms "left," "right," "front," "rear," "top" or "upper," and "bottom" or "lower," "vertical," and "horizontal" are used herein for clarity of description. Unless otherwise noted, the directional terms are used with reference to the corresponding directions as seen in the view of FIG. 1. Furthermore, the term "side" generally refers to the front or back of the assembly, while the term "end" generally refers to the left or right end of the assembly, as viewed in FIGS. 1, 12, 24, and 27. It should be appreciated, however, that no limitation is intended by the use of these directional terms with respect to the orientations at which the assembly may be positioned.

A table saw assembly 100 is depicted in FIG. 1. The table saw assembly 100 includes a support arrangement 104, a table top assembly 108, a saw undercarriage assembly 110, and an adjustment mechanism 112. The table top assembly 108 includes rails 114, 116, a main table portion 120, an extension table portion 124, and a table extension lock lever 128. The main table portion 120 defines a saw blade opening 132 formed substantially centrally in the main table portion 120. The main table portion 120 and the extension table portion 124 define a work piece support surface 136. The extension table portion 124 is positioned aligned with the main table portion 120 and is configured to couple to the rails 114, 116 to extend the length of the work piece support surface 136. The table extension lock lever 128 is configured to lock in the extension table portion 124 with the rails 114, 116. The table top assembly 108 is supported by to the support arrangement 104.

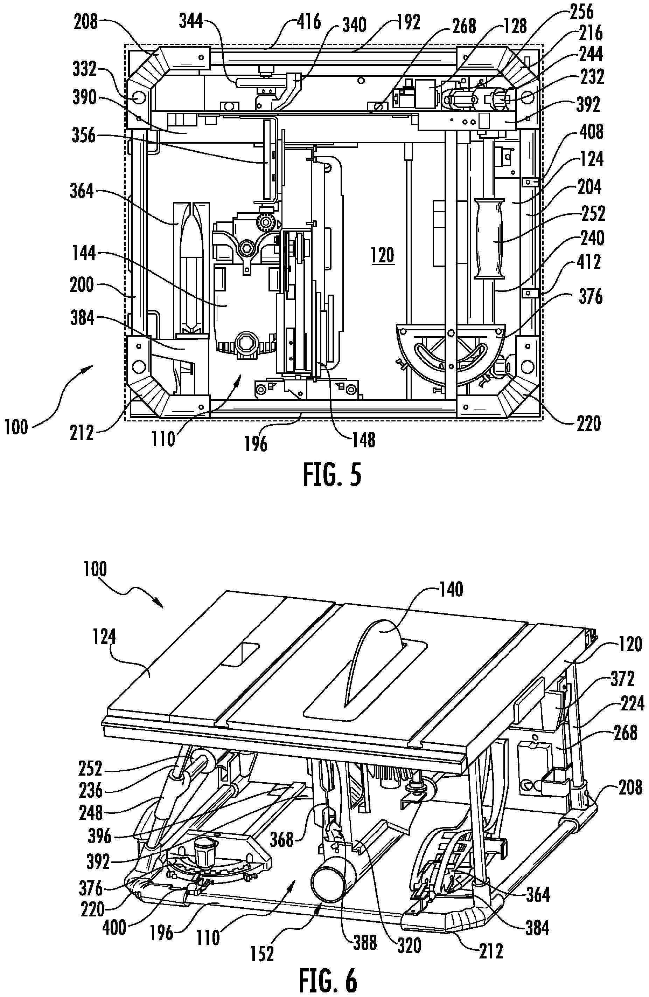

As can be seen in FIGS. 1 and 3-6, the saw undercarriage assembly 108 includes a saw blade 140 rotatably mounted onto a motor 144, a lower blade guard 148, a dust exhaust port 152, and a riving knife 156. The saw blade 140 is configured to extend through the saw blade opening 132 and is further configured to be raised, lowered, and beveled with respect to the work piece support surface 136, as further described below. The lower blade guard 148 shields the blade from contact by an operator and collects dust and debris produced during cutting. The collected dust and debris is urged out the dust exhaust port 152, which may be connected to a vacuum hose or dust collection bag. The riving knife 156 is attached to the lower blade guard 148 to extend through the saw blade opening 132 behind the saw blade 140 during cutting to split the workpiece on opposite sides of the cut.

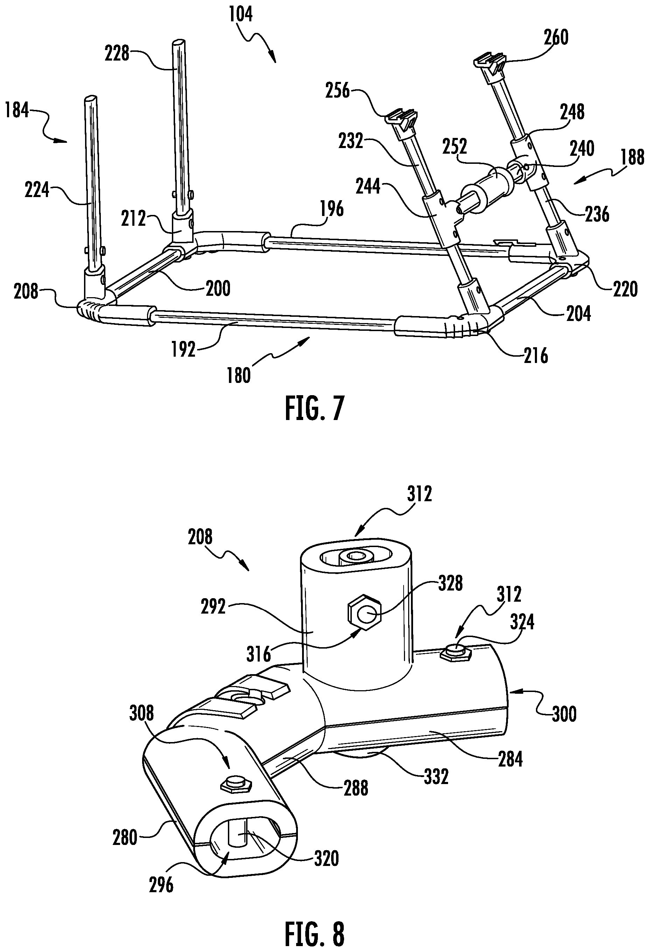

FIG. 7 illustrates the support arrangement 104 with all other components removed for clarity. The support arrangement 104 includes a base support 180, a left end support 184, and a right end support 188. The base support 180 includes an elongated front side base member 192, an elongated rear side base member 196 a left end base member 200, and a right end base member 204. In the embodiment illustrated in FIGS. 1-10, the front and rear base members 192, 196 are substantially identical and are positioned generally parallel to one another. Likewise, the left and right end base members 200, 204 are substantially identical and are positioned generally parallel to one another and generally orthogonal to the front and rear base members 192, 196. In other embodiments, the front and rear base members may be aligned differently and may be different from one another. Likewise, the end base members 200, 204 may be different from one another, may be aligned differently, and/or may be at different angles relative to the front and rear base members 192, 196. The front and rear base members 192, 196 are each connected to the left end base member 200 by a vertical corner junction element 208, 212, respectively, and to the right end base member 204 by an angled corner junction element 216, 220, respectively.

The left end support 184 includes a front vertical support member 224 and a rear vertical support member 228. Each of the front and rear vertical support members 224, 228 is connected to the respective vertical corner junction element 208, 212 to extend vertically away from the base support 180. While the front and rear vertical support members 224, 228 are described as being vertical in the illustrated embodiment, the reader should appreciate that in other embodiments, the supports can be positioned at an angle relative to vertical.

The right end support 188 includes a front angled support member 232 and a rear angled support member 236. Each of the front and rear angled support members 232, 236 is connected to the respective angled corner junction element 216, 220 and extends away from the base support 180 at an angle relative to vertical.

A handle support member 240 extends between the angled support members 232, 236 at approximately the midpoint of the angled support members. The handle support member 240 is connected to the angled support members 232, 236 by T-junction elements 244, 248, respectively. A handle grip portion 252 surrounds a central portion of the handle support member 240. As will be described in further detail below, the handle grip portion 252 is located along the center of gravity when the table saw assembly 100 is turned such that the left end is down and the right end is up to facilitate a user carrying the table saw assembly 100 with one hand. Each of the front and rear angled support members 232, 236 is attached at an upper end to a table connector 252, 256, which attaches the angled support member 232, 236 to the underside of the main table portion 120 of the table top assembly 108.

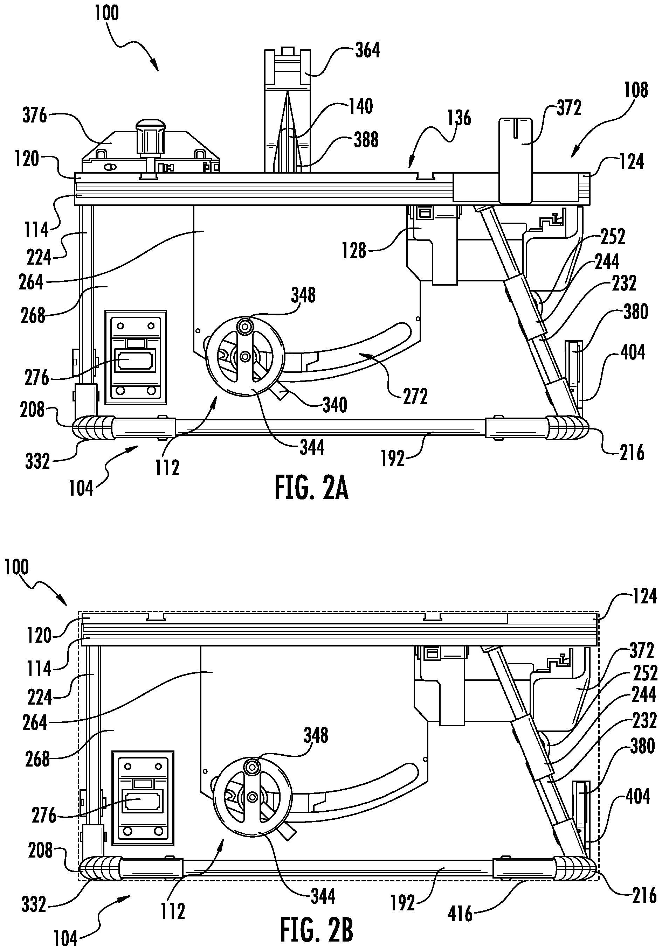

As is shown in FIGS. 1, 2A, and 2B, the front of the support arrangement 104 includes an inner front plate 264 and an outer front plate 268. The front plates 264, 268 are generally planar with respect to the front vertical and angled support members 224, 232 and are connected to the front vertical and angled support members 224, 232. In some embodiments, one or both of the front plates 264, 268 may be connected to the underside of the main table portion 120. In further embodiments, the front plates 224, 232 may be formed as a single plate. The inner front plate 224 defines an arcuate opening 272 through which the adjustment mechanism 112 extends. A power switch 276, which is used to activate the motor 144, is positioned in and extending through the outer front panel 268.

FIG. 8 illustrates the vertical corner junction element 208 with the adjacent support members removed for clarity. The vertical corner junction element 208 includes a first end portion 280, a second end portion 284, an angled intermediate portion 288, and a vertically extending portion 292 extending from the second end portion 284. Each of the first end portion 280, second end portion 284, and vertically extending portion 292 includes an opening 296, 300, 304 sized to receive the corresponding support member 192, 200, 224, respectively, and an aperture 308, 312, 316, respectively, having an axis that is generally orthogonal to an axis of the corresponding opening 296, 300, 304. A fastener 320, 324, 328 extends through the corresponding opening 296, 300, 304, respectively, and the support member 192, 200, 224, to retain the support member 192, 200, 224 in place. In one embodiment, one end of the apertures 308, 312, 316 is threaded and the fasteners 320, 324, 328 are threaded members configured to screw into the threaded end of the apertures, though other fastening mechanisms are used in alternative embodiments. The vertical corner junction element 208 further includes at least one friction pad 332, which may be formed of rubber or another suitable material, positioned on the bottom side of the vertical corner junction element 208 to increase the static friction on the table saw assembly 100 when the table saw assembly is resting in an upright position, thereby reducing the likelihood of movement of the table saw assembly 100 during use.

The rear vertical corner junction element 212 is configured substantially identical to the front vertical corner junction element 208 depicted in FIG. 8, and the angled corner junction elements 216, 220 are also configured substantially identical to the depicted vertical corner junction element 208 with the exception that the angled corner junction elements 216, 220 include an angled upwardly extending portion instead of the vertically extending portion to facilitate connection to the angled support members 232, 236.

Returning to FIGS. 1-4, the adjustment mechanism 112 includes a bevel adjustment locking lever 340, a height adjustment wheel 344 having an adjustment handle 348 configured to rotate with respect to the height adjustment wheel 344, and a gear arrangement 352. The height adjustment wheel 344 is connected to the motor 144 and saw blade 140 through the gear arrangement and shafts 356, 360 such that rotation of the height adjustment wheel raises and lowers the motor 144 and saw blade 140 to set a height of the saw blade 140 above the work piece support surface 136. The bevel adjustment locking lever 340 is configured to lock and unlock the bevel angle of the saw blade 140. When the bevel adjustment locking lever 340 is unlocked, the height adjustment wheel 344 and bevel adjustment locking lever 340 are movable within the arcuate opening 272 of the inner front panel 264 to pivot the motor 144 and saw blade 140 relative to an axis at the center of the saw blade opening 132. Once the saw blade 140 is at a desired angle to perform a bevel cut, the bevel adjustment locking lever 340 is tightened to lock the motor 144 and saw blade 140 in place for the bevel cut.

During use of the table saw assembly 100, various accessories are used for safety and to facilitate simple and accurate cutting. These accessories can include: a saw blade guard 364, which may be mounted to the top of the main table portion 120 to protect a user from the saw blade 140; an anti-kickback device 368, which is mounted to the riving knife 156 and is configured to prevent the workpiece from kicking back toward the user; an adjustable rip fence 372, which facilitates alignment of a workpiece during a cut; a miter gauge 376, which facilitates aligning the angle of the workpiece relative to the saw blade for miter cuts; and a workpiece pusher 380, which enables a user to manipulate a workpiece near the saw blade 140.

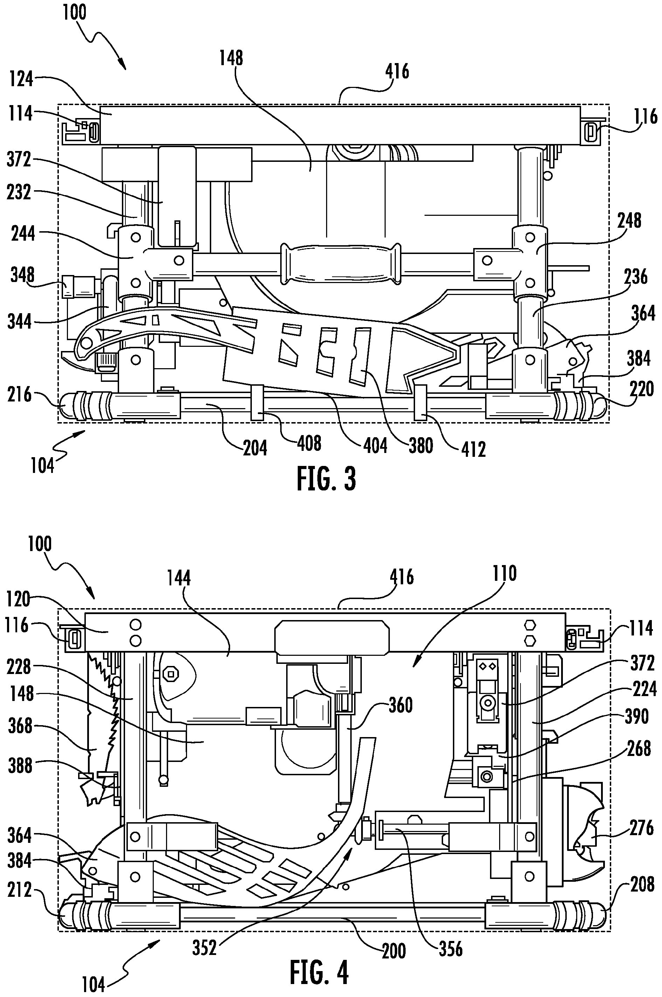

When the table saw assembly 100 is moved, the accessories 364, 368, 372, 376, 380 are stored by attaching to the support arrangement 104 to reduce the size of the table saw assembly 100. As seen in FIGS. 4-6, the saw blade guard 364 is attached to a blade guard bracket 384, which is affixed to the fasteners of the rear vertical corner junction element 208. The anti-kickback device 368 is attached to the lower blade guard 148 via an anti-kickback device clip 388 by, for example, a fastener, such as a screw. The rip fence 372 is supported in a rip fence support 390, which is connected to a back side of the front panels 264, 268. The miter gauge 376 is attached at one end to a flange 392 of the outer front panel 268 by a front miter gauge bracket 396, and at the other end to the fastener of the rear angled corner junction element 220 by a rear miter gauge bracket 400. The workpiece pusher 380 is positioned in a pusher holder 404, which includes two clips 408, 412 wrapping at least partially around the right end base member 204 so as to fasten to the right end base member 204.

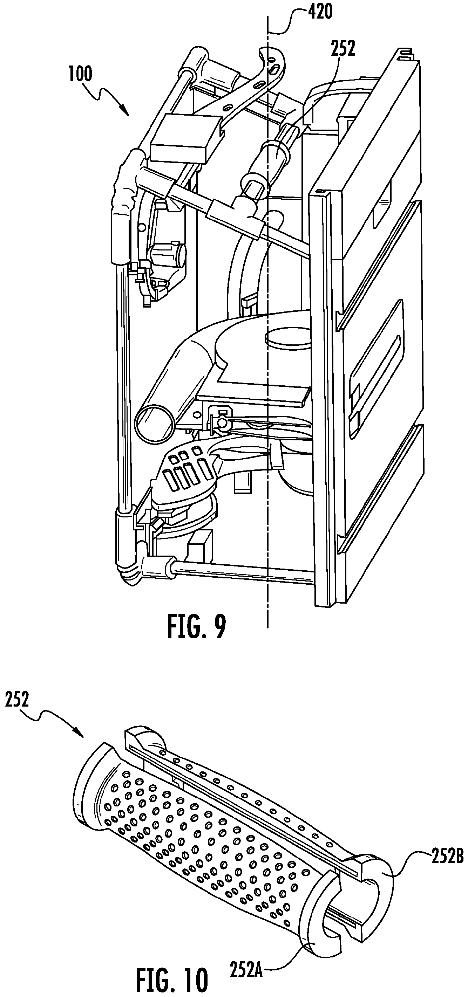

When the saw blade 140 is lowered below the surface of the main table portion 120 and the accessories 364, 368, 372, 376, 380 are all attached to their various storage locations, the table saw assembly 100 is entirely contained within a compact rectangular prismatic volume, the outline of which is denoted by reference numeral 416 in FIGS. 2B-5. This position is referred to herein as the "stowed position." When the table saw assembly 100 is in the stowed position, the table saw assembly 100 can then be turned to rest on the left end, and stored compactly, as shown in FIG. 9.

The components of the table saw assembly 100, particularly the motor 144 and the table top portions 120, 124, have substantial mass. The table top assembly 100 is configured such that, when in the stowed position and when the saw is oriented such that the handle 252 is at the top (FIG. 9), the vertical axis 420 of the center of mass of the table saw assembly 100 passes through the handle 252. This enables a user to carry the table saw assembly 100 by gripping the handle 252.

The handle grip portion 252 is illustrated in FIG. 10. The handle grip portion includes two substantially equal halves 252A and 252B. The two halves 252A and 252B are positioned around the handle support member 240 and clamped together. In some embodiments, an adhesive or a fastener firmly retains the halves 252A and 252B together.

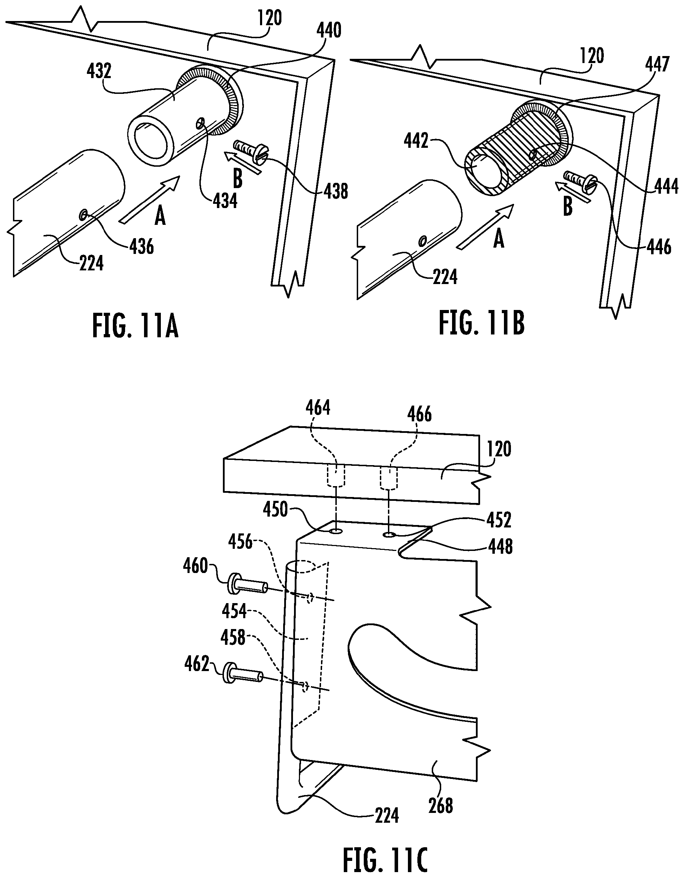

FIGS. 11A-11C illustrate different connecting arrangements for connecting the vertical and angled support members 224, 228, 232, 236 to the main table portion 120 of the table top assembly 108. FIGS. 11A-11C are described with reference to the front vertical support member 224, though the reader should appreciate that any of the vertical and angled support members 224, 228, 232, and 236 may be installed in a similar manner.

In the arrangement of FIG. 11A, the main table portion 120 has an integral pillar 432 extending downwardly from the bottom surface of the main table portion 120. Each of the pillar 432 and the vertical support member 224 has an aperture 434, 436, respectively, through which a fastener 438 extends. In some embodiments, the fastener 438 is a threaded member, for example a screw, configured to extend through an aperture (not shown) in the pillar 432 opposite aperture 434 and into a threaded aperture (not shown) in the vertical support member 224 opposite aperture 436. A rubber washer 440 or other damping element may be arranged between the upper surface of the vertical support member 224 and the bottom surface of the main table portion 120 to reduce transmission of vibrations between the main table portion 120 and the vertical support member 224.

In the arrangement of FIG. 11B, the main table portion 120 has an integral pillar 442 extending downwardly from the bottom surface of the main table portion 120, which is surrounded by a bushing 444. The vertical support member 224 slides over the bushing 444, and is fastened to the pillar 442 and bushing 444 with a fastener 446 in a similar manner as described above with reference to FIG. 11A. As in the embodiment of FIG. 11A, a rubber washer 447 or other damping element may be arranged between the upper surface of the vertical support member 224 and the bottom surface of the main table portion 120 to reduce transmission of vibrations between the main table portion 120 and the vertical support member 224. The bushing 444 may be formed of an elastic material such as rubber to further reduce transmission of vibration between the main table portion 120 and the vertical support member 224.

In the embodiment of FIG. 11C, the vertical support member 224 is attached to the outer front panel 268 instead of being directly connected to the main table portion 120. The outer front panel 268 includes a top flange 448 having two apertures 450, 452, and an end flange 454 having two apertures 456, 458. Two fasteners 460, 462 extend through the vertical support member 224 and the apertures 456, 458 in the end flange 454 to secure the vertical support member 224 to the outer front panel 268. Two fasteners (not shown) extend through the apertures 450, 452 in the top flange 448 and into two threaded openings 464, 466 in the main table portion 120 to secure the outer front panel 268 to the main table portion 120.

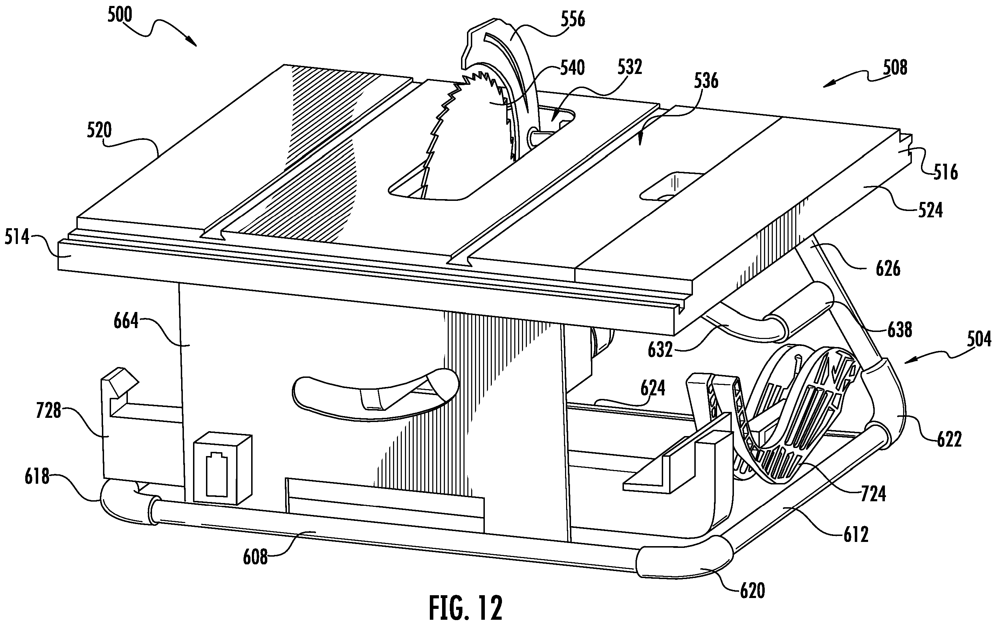

FIG. 12 illustrates a perspective view of another embodiment of a table saw assembly 500. The table saw assembly 500 is similar to the table saw assembly 100 described above with regard to FIGS. 1-9, with the exception of the frame or support arrangement. The table saw assembly 500 includes a support arrangement 504, a table top assembly 508, a saw undercarriage assembly 510, and an adjustment mechanism 512.

The table top assembly 508 includes rails 514 and 516, a main table portion 520, an extension table portion 524. The main table portion 520 defines a saw blade opening 532 formed substantially centrally in the main table portion 520. The main table portion 520 and the extension table portion 524 define a work piece support surface 536. The extension table portion 524 is positioned aligned with the main table portion 520 and is configured to couple the rails 514 and 516 to extend the length of the work piece support surface 536. The table top assembly 508 is connected to the support arrangement 504.

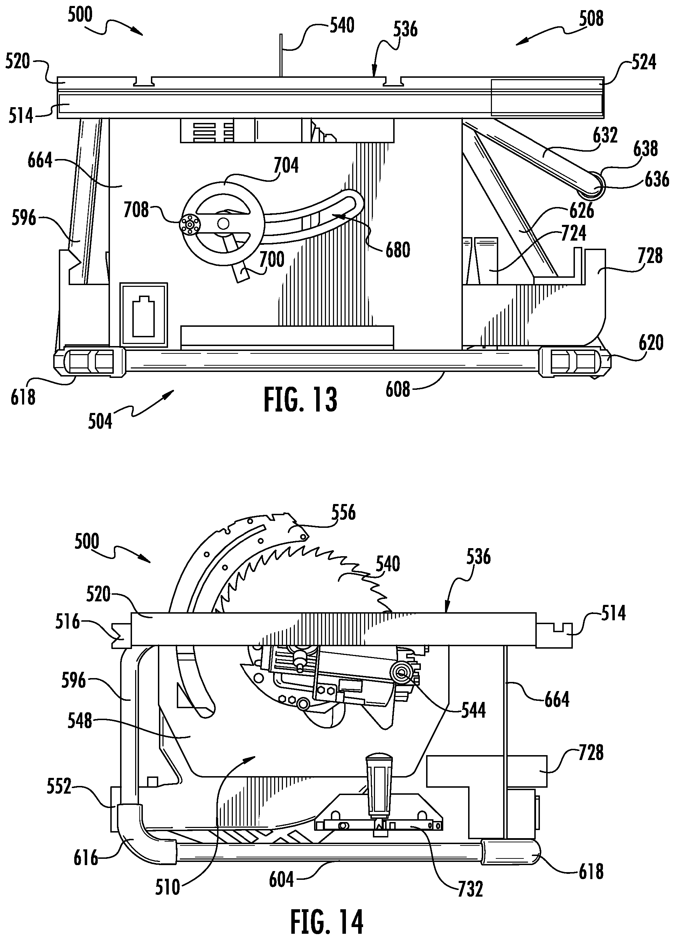

As can be seen in FIGS. 14-16, the saw undercarriage assembly 510 includes a saw blade 540 rotatably mounted onto a motor 544, a lower blade guard 548, a dust exhaust port 552, and a riving knife 556. The saw blade 540 is configured to extend through the saw blade opening 532 and is further configured to be raised, lowered, and beveled with respect to the work piece support surface 536, as further described below. The lower blade guard 548 shields the blade from contact by an operator and collects dust and debris produced during cutting. The collected dust and debris is urged out the dust exhaust port 552, which may be connected to a vacuum hose or dust collection bag. The riving knife 556 is attached to the lower blade guard 548 to extend through the saw blade opening 532 behind the saw blade 540 during cutting to split the workpiece on opposite sides of the cut.

The support arrangement 504 includes a base portion 580, a left end portion 584, and a right end portion 588. In the illustrated embodiment, the base portion 580, left end portion 584, and right end portion 588 are all integrally and monolithically formed, such that the portions 580, 584, and 588 are formed of a single piece of material bent into the shape of the single piece frame 590. In alternative embodiments, the frame can be formed of more than one piece of material affixed together by, for example, welding or screw attachments. In one embodiment, the frame is formed of a lightweight metal, for example aluminum.

The left end portion 584 includes an upper leg 592 and a rear leg 596. The upper leg 592 and rear leg 596 are bent at an angle of approximately 90 degrees with respect to one another. The upper leg 592 is oriented horizontally, and includes two apertures 600, 602 configured for a fastener to pass through to attach the left upper leg 592 to the underside of the main table portion 520. The left rear leg 596 is oriented at an angle slightly offset from vertical when viewed from the front (FIG. 13), for example at an angle of between about 2 and about 15 degrees with respect to vertical, and is vertical when viewed from the end (FIG. 14). When viewed from the end, therefore, the left upper leg 592 and the left rear leg 596 form the shape of an upside down "L".

The base portion 580 includes a base left end leg 604, a base front side leg 608, and a base right end leg 612. The base front side leg 608 is perpendicular to both the base left end leg 604 and the base right end leg 612, and the base left and right end legs 604, 612 are parallel to one another such that, when viewed from above, the base legs 604, 608, 612 form a "U" shape. Each corner of the base portion 580 includes a junction foot 616, 618, 620, 622, which, as described in detail below, provides a stable base and vibration damping for the table saw assembly 500. In some embodiments, the base portion 580 also includes a rear side reinforcing rod 624 extending from the rear portion of the base left end leg 604 to the rear portion of the base right end leg 612 to provide additional reinforcement against deformation of the base portion 580.

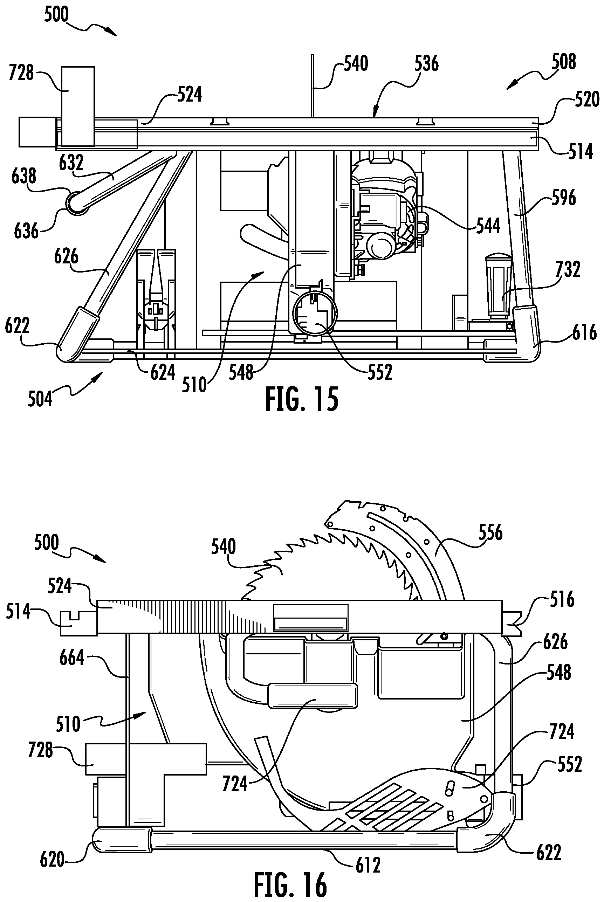

The right end portion 588 of the support assembly 504 includes a right rear leg 626, a right upper leg 628, a right front leg 632, and a handle leg 636. The right rear leg 626 is perpendicular to the base right end leg 612 and extends from the right end leg 612 at an offset from vertical, for example at an angle of from about 15 to about 45 degrees with respect to vertical when viewed from the front side (FIG. 13) and vertical when viewed from the end (FIG. 16). The right upper leg 628 extends horizontally and is connected to and perpendicular to both the right rear leg 626 and the right front leg 632. The right upper leg 628 extends between about half to about three-quarters of the way from the rear of the support arrangement 504 to the front of the support arrangement 504. The right upper leg 628 includes two apertures 640, 642, through which a fastener passes to attach the right upper leg 628 to the underside of the main table portion 520. The right front leg 632 extends downwardly and toward the right end of the support arrangement 504. In some embodiments, the right front leg 632 extends at the same angle as the right rear leg 626 relative to vertical, while in other embodiments, such as those illustrated in FIGS. 13 and 15, the right front leg 632 is at a greater angle relative to vertical, for example at an angle of about 40 to about 60 degrees.

The handle leg 636 extends horizontally from the end of the right front leg 632 towards the rear of the support arrangement 504 approximately half of the way to the right rear leg 626. A handle grip portion 638 similar to the handle grip portion 252 described above is attached to the handle leg 636 to facilitate holding of the handle leg 636. As in the embodiment described above with regard to FIGS. 1-11, the handle grip portion 638 is configured to align with the axis of the center of gravity when the table saw arrangement 500 is arranged such that handle is oriented upward to facilitate carrying the table saw arrangement 500 by only the handle grip portion 638. The right end portion 588 of the support arrangement 504 is configured such that the right end legs 626, 628, 632, 636, in conjunction with the base right end leg 612, approximately form an upside-down "G" shape when viewed from the end (FIG. 16).

The single piece frame 590 is lightweight, since the arrangement does not require a full box frame, which contributes to added weight. Furthermore, the single piece frame 590 is simple to manufacture, since no connection welds or other connection mechanisms are necessary between the legs of the frame. Furthermore, the integrally formed single piece frame 590 is strong and sturdy, since no gaps are formed between the legs of the frame 590.

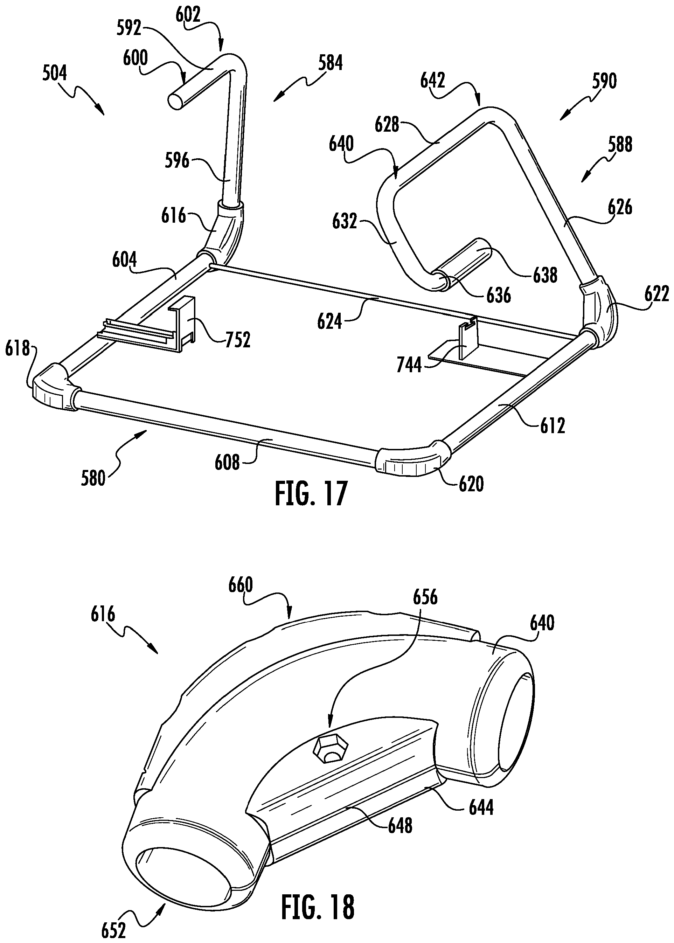

FIG. 18 depicts the junction foot 616. The reader should appreciate that while only junction foot 616 is described herein, the other junction feet 618, 620, 622 may be identical or substantially identical to the described junction foot 616. The junction foot 616 includes a first portion 640 and a second portion 644, which are generally identical, and which are separated by a seam 648. The first and second portions 640, 644 define an opening 652 therebetween, in which the connection between the legs 596, 604 is arranged. The first portion 640 includes an aperture 656, and the second portion 644 includes a corresponding aperture (not shown) through which a fastener (not shown) extends to clamp the first and second portions 640, 644 to one another around the bend between the legs 596, 604. The junction foot 616 further includes a contact surface 660 configured to contact the ground and support the table saw arrangement 500 when the table saw arrangement 500 is in use. Junction feet 618, 620, in contrast, are configured to rest on the lower edge of the second portion, as can be seen in FIG. 17. In one embodiment, the junction feet 616, 618, 620, 622 are formed of rubber to increase friction between the table saw assembly 500 and the floor and prevent the table saw assembly 500 from sliding during use, and to prevent transmission of vibrations between the table saw assembly 500 and the surface on which the table saw assembly 500 is supported.

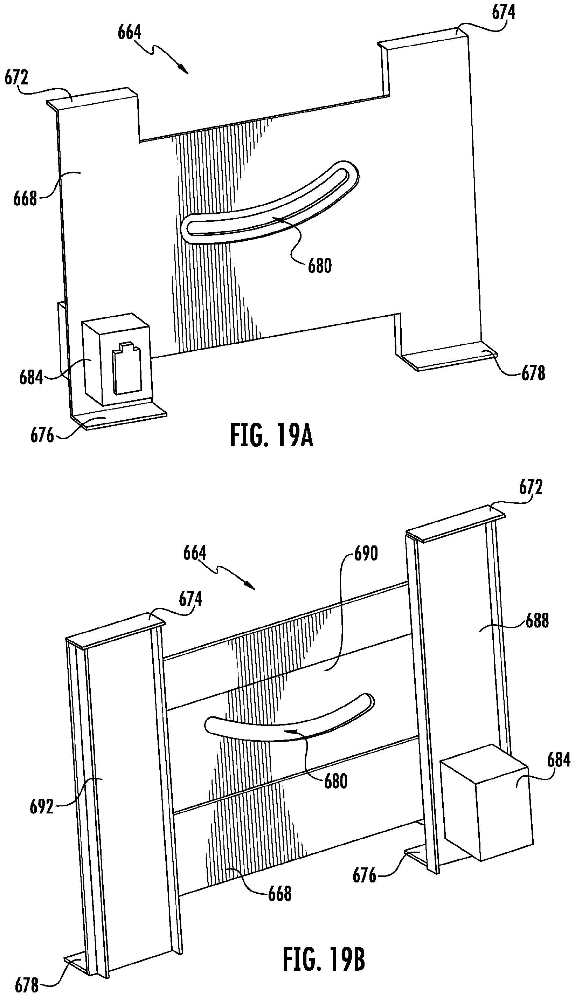

FIGS. 19A and 19B illustrate front and back views, respectively, of a front panel 664 of the table saw assembly 500. The front panel 664 includes a front plate 668 having upper flanges 672, 674, lower flanges 676, 678, and defining an arcuate opening 680 located generally centrally in the front plate 668. In the illustrated embodiment, the front plate 668 is formed of plastic, though other materials may be used in other embodiments. The upper flanges 672, 674 extend behind the front plate 668 and are configured to be attached to the underside of the main table portion 520. The lower flanges 676, 678 extend from the front of the front plate 668 and are configured to attach to the base front side leg 608. The adjustment mechanism 512 extends through the arcuate opening 680. The front plate 668 includes a power switch extending from a lower portion thereof, which is configured to be manipulated to activate the motor 544 of the table saw arrangement 500. In some embodiments, the front panel 664 includes metal reinforcement sections 688, 690, 692 to provide additional structural reinforcement to the front panel 664.

The adjustment mechanism 512 includes a bevel adjustment locking lever 700, a height adjustment wheel 704 having an adjustment handle 708 configured to rotate with respect to the height adjustment wheel 704, and a gear arrangement (not shown), which is similar to the gear arrangement 352 described above with reference to the embodiment of FIGS. 1-11. The height adjustment wheel 344 is connected to the motor 544 and saw blade 540 through the gear arrangement such that rotation of the height adjustment wheel raises and lowers the motor 544 and saw blade 540 to set a height of the saw blade 540 above the work piece support surface 536.

The bevel adjustment locking lever 700 is configured to lock and unlock the bevel angle of the saw blade 540. When the bevel adjustment locking lever 700 is unlocked, the height adjustment wheel 704 and bevel adjustment locking lever 700 are movable within the arcuate opening 680 of the front panel 664 to pivot the motor 544 and saw blade 540 relative to an axis at the center of the saw blade opening 532. Once the saw blade 540 is at a desired angle to perform a bevel cut, the bevel adjustment locking lever 700 is tightened to lock the motor 544 and saw blade 540 in place for the bevel cut.

During use of the table saw assembly 500, various accessories are used for safety and to facilitate simple and accurate cutting. These accessories may include a saw blade guard 724, which may be mounted to the top of the main table portion 520 to protect a user from the saw blade 740, an adjustable rip fence 728 to facilitate alignment of a workpiece during a cut, and a miter gauge 732 for facilitating miter cuts.

When the table saw assembly 500 is moved, the accessories 724, 728, 732 are stored by attaching to the support arrangement 504 to reduce the size of the table saw assembly 500. The saw blade guard 724 is attached to a blade guard bracket 744, which is affixed to the base right end leg 612. The rip fence 728 is supported by a rip fence support (not shown), which is connected to the base left and right end legs 604, 612. The miter gauge 376 is attached to a miter gauge bracket 752, which is mounted on the base left end 604 of the frame 590.

In some embodiments, the table saw assembly 500 includes an anti-kickback device and a workpiece pusher similar to the anti-kickback device 368 and a workpiece pusher 380 described above. In further embodiments, the table saw assembly 500 may include additional accessories that may be mounted to the frame 590 when the table saw assembly 500 is in the stowed position.

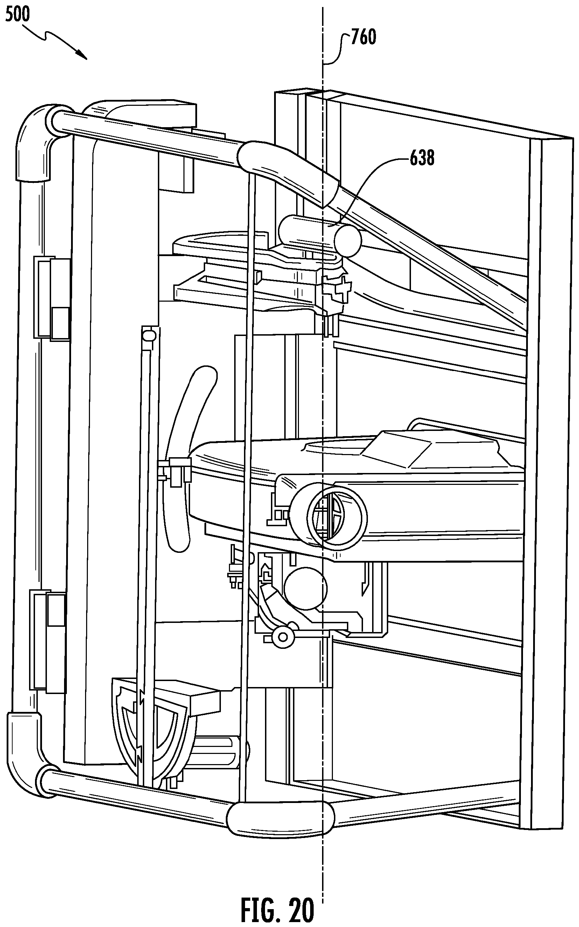

When the saw blade 540 is lowered below the surface of the main table portion 520 and the accessories 724, 728, 732 are all attached to their various storage locations, the table saw assembly 500 is entirely contained within a compact rectangular prismatic volume defined by the outer extents of the frame 590 and the table top 536. This position is referred to herein as the "stowed position." When the table saw assembly 500 is in the stowed position, the table saw assembly 500 can then be turned to rest on the left end, and stored compactly, as shown in FIG. 20.

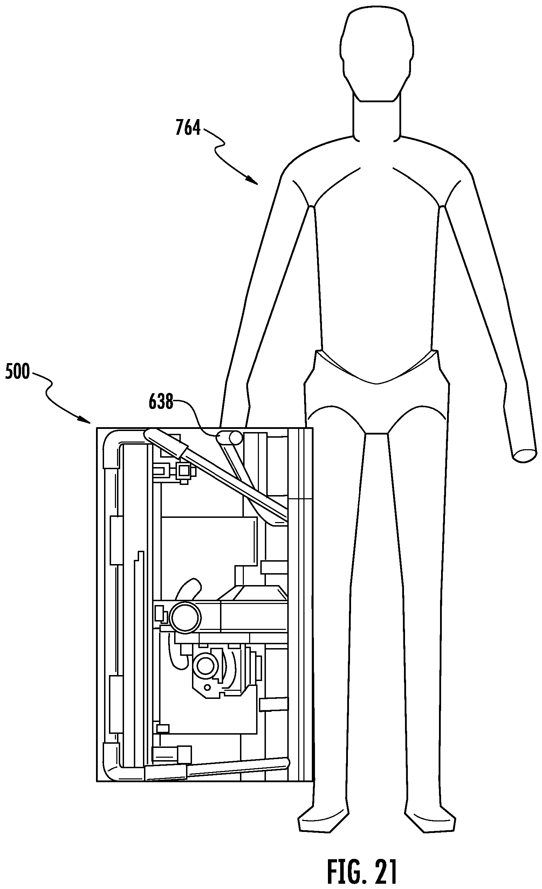

The components of the table saw assembly 500, particularly the motor 544 and the table top portions 520, 524, have substantial mass. The table top assembly 500 is configured such that, when in the stowed position and when the saw is oriented such that the handle 638 is at the top (FIG. 20), the vertical axis 760 of the center of mass of the table saw assembly 500 passes through the handle 638. This enables a user 764 to carry the table saw assembly 500 by gripping the handle 638, as shown in FIG. 21.

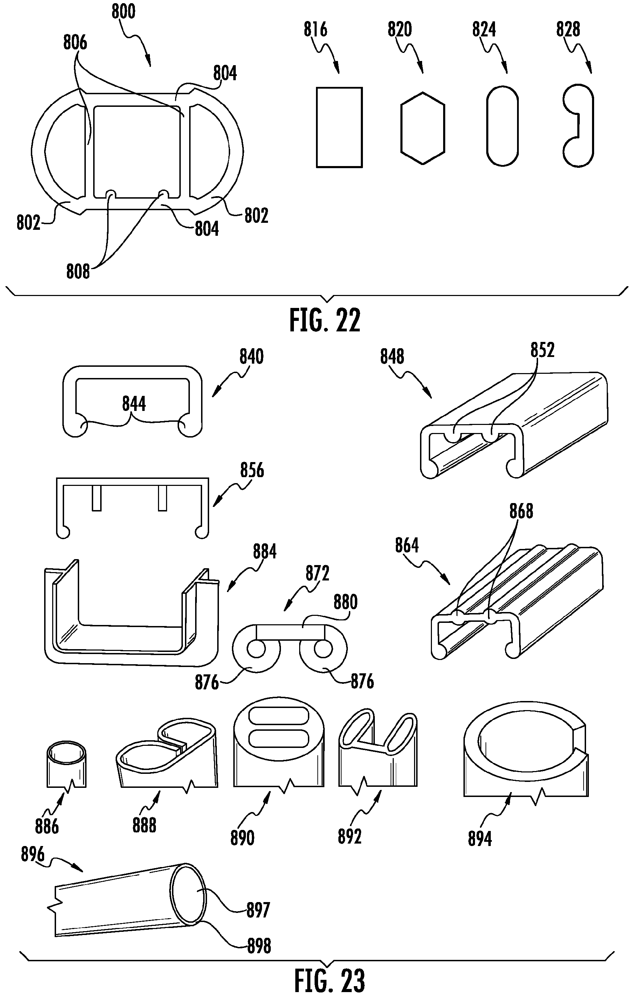

FIG. 22 illustrates cross-sectional views of various closed-form members that may be used for the frame components of the support arrangements 104, 504 of the above-described table saw assemblies 100, 500. The frame structure 800 includes two outer semicircular sections 802 and to generally parallel crossbeams 804. Structural supports 806 extend between the crossbeams 804 to provide additional support, while structural ribs 808 may be positioned in the structure 800 for further reinforcement. In other embodiments, the support arrangement 104, 504 may include a closed rectangular frame structure 816, a closed hexagonal frame structure 820, a closed oval-shaped frame structure 824, or a closed structure 828 having two circular portions separated by a central plate and an outer plate.

FIG. 23 illustrates cross-sectional views of various open-form members that may be used for components of the support arrangements 104, 504 of the above-described table saw assemblies 100, 500. Structure 840 is essentially a C-channel shape having additional ribs 844 extending along the open end. Structure 848 is similar to structure 844, with the exception that the structure includes additional ribs 852 extending inwardly from the long section of the channel. Structure 856 is similar to structure 848, except that the ribs 860 are separate plates attached by, for example, welding. Structure 864 is similar to structure 848, except that the ribs 868 extend both inwardly and outwardly from the long section of the C-channel. Structure 872 includes two hollow cylindrical portions 876 connected by a plate 880, which may be welded to the hollow cylindrical portions 876. Structure 884 illustrates a T-beam that may be used in the support arrangement 104, 504. Hollow cylindrical structure 886, dual hollow cylindrical structure 888, cylindrical structure 890 with a central plate, dual cylindrical structure 892 with a connecting plate, and hollow C-shaped structure 894 may also be used in the support arrangements 104, 504. Structure 896 includes a structural core 897 surrounded by a hollow cylindrical portion 898, and may be configured such that the structural core 897 has noise-damping or vibration damping qualities and may, for example, be formed of hard rubber.

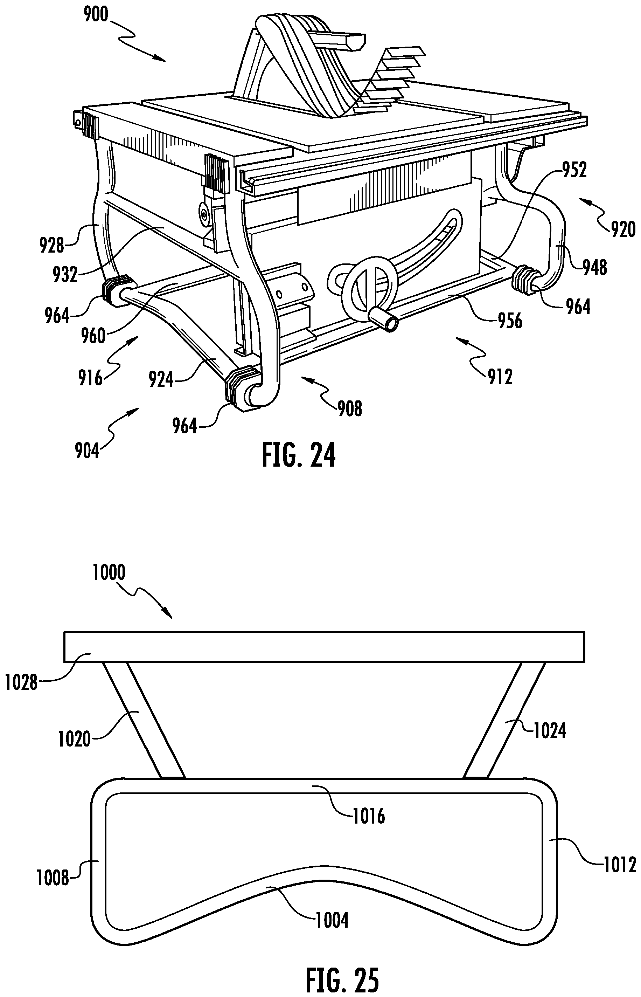

Another table saw arrangement 900 is illustrated in FIG. 24. The table saw arrangement 900 is generally identical to the table saw arrangement 500 described above, with the exception that the support arrangement 904 differs from support arrangement 504. Detailed explanation of the similar components of the table saw arrangement 900 will be dispensed with in this embodiment.

The support arrangement 904 includes a frame structure 908 including a base portion 912, a left end portion 916, and a right end portion 920. The left end portion 916 includes two vertically extending legs 924, 928, a crossbeam 932, and a left lower leg 936 having two angled portions 940, 944 that are angled with respect to horizontal. The vertically extending legs 924, 928 connect the left lower leg 936 to the table top, and are closer to one another at the table top than at the connection to the left lower leg 936.

The right end portion includes two vertically extending members 948 (only one is visible in FIG. 24) extending from a right lower leg 952 to the table top, with a bent portion generally halfway between the bottom and the table top. The handle (not shown) is connected to the vertically extending members in a manner similar to the embodiments discussed above.

The base portion includes two horizontal legs 956, 960 extending across to connect the left lower leg 936 with the right lower leg 952. The base also includes four rubber ground shoes 964 (only three are visible in FIG. 24) to reduce transmission of vibration between the table saw arrangement 900 and the ground and to avoid movement of the table saw arrangement 900 during use.

FIG. 25 illustrates an end view of another support arrangement 1000 for a table saw arrangement. The support arrangement 1000 includes a base leg 1004 that is angled with respect to horizontal, two horizontal legs 1008, 1012, and a crossbeam 1016 that is horizontal. Two angled legs 1020, 1024 extend from the crossbeam 1016 to attach to the table top 1028 at an angle with respect to vertical.

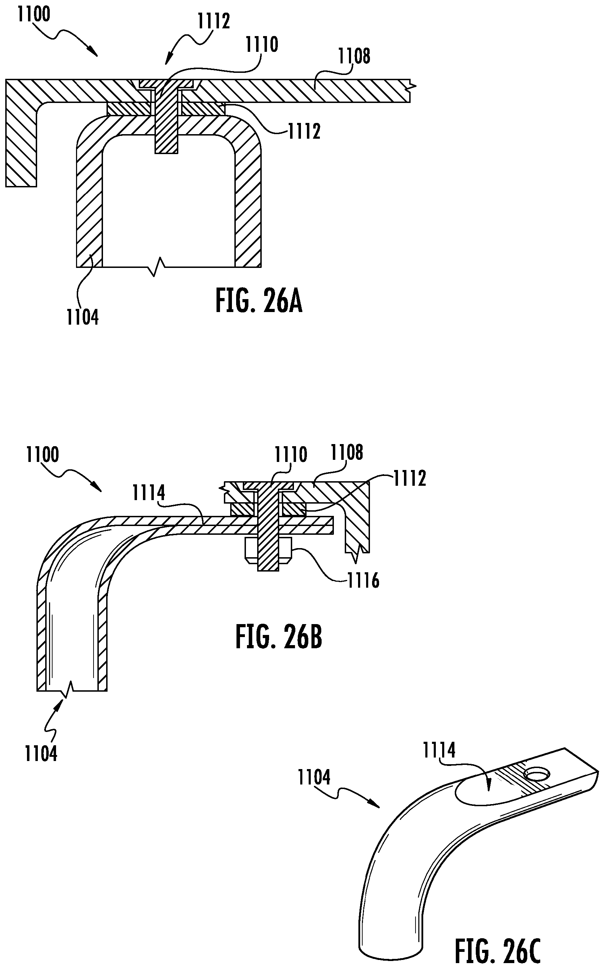

FIGS. 26A-26C illustrate a connection arrangement 1100 for connecting a frame component 1104 to the table top 1108. A fastener 1110 extends through an aperture 1112 defined through the table top 1108, a washer 1112, and a flattened portion 1114 of the frame component 1104. The washer 1112 may be formed of rubber or another elastic material to reduce transmission of vibrations between the table top 1108 and the frame component 1104. The fastener 1110 may be received by a threaded member, for example a nut 1116, to clamp the flattened portion 1114 of the frame component 1104 to the table top 1108.

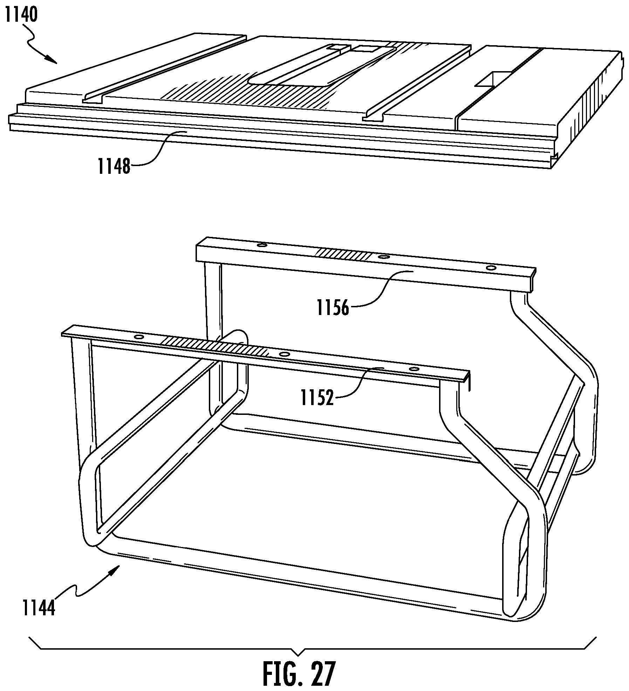

FIG. 27 illustrates another connection mechanism 1140 for connecting a frame 1144 to a table top 1148. The connection mechanism 1140 includes two brackets 1152, 1156 having an "L"-shaped cross-section. The brackets 1152, 1156 are welded to the frame 1144 and are configured to be fastened to the table top 1148 by, for example, threaded fasteners.

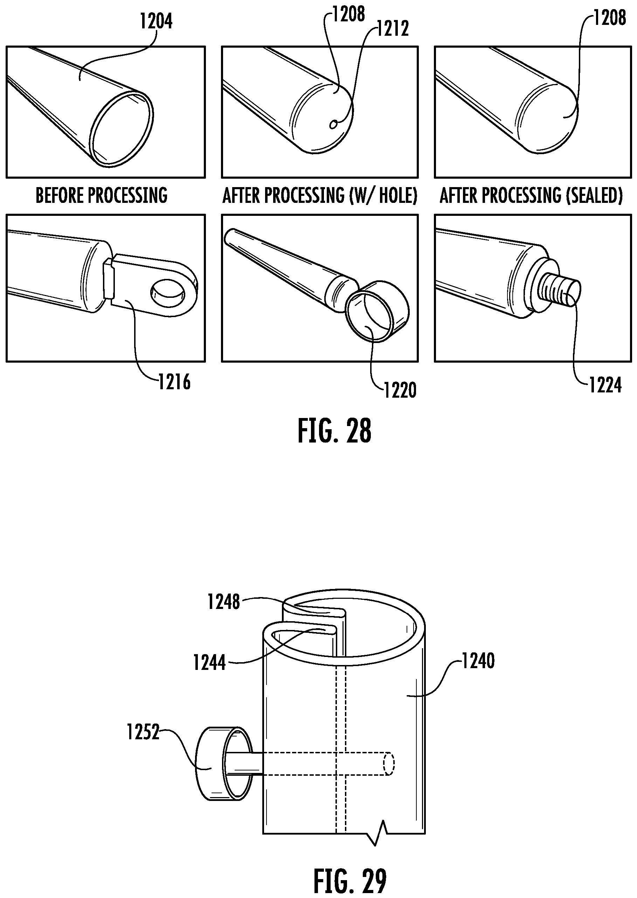

FIG. 28 illustrates a frame component 1200 formed as a pinched or tapered hollow cylindrical member. A hollow cylindrical member 1204 is processed to have a tapered end 1208 which, in some embodiments includes a hole 1212. A connector 1216, 1220, or 1224 is fitted into the hole 1212 and used to connect the frame component 1200 to the table top or to another frame component.

FIG. 29 illustrates another frame component 1240 that is shaped substantially as a hollow cylinder having two parallel engagement walls 1244, 1248. A threaded self-tapping fastener 1252 may be inserted between the parallel engagement walls 1244, 1248 to connect the frame component 1240 to another frame component, a ground show, or the table top.

It will be appreciated that variants of the above-described and other features and functions, or alternatives thereof, may be desirably combined into many other different systems, applications or methods. Various presently unforeseen or unanticipated alternatives, modifications, variations or improvements may be subsequently made by those skilled in the art provided they remain within the scope of the claims.

## Claims

1. A portable table saw system comprising:
a table top assembly (108) including a work piece support surface (536) and defining a saw blade opening (532);
a saw assembly (100) supported under said table top assembly (108) and including a saw blade (540) configured to extend through said saw blade opening (532);
a support arrangement (104, 504) comprising:
a base portion (580, 912) including (i) a first base leg (604) arranged at a first end region of said table saw system and extending in a first plane in a first direction, (ii) a second base leg (612) arranged in a second opposite end region of said table saw system and extending in said first plane in said first direction, and (iii) a third base leg (608) arranged in a first side region of said table saw system and extending in said first plane in a second direction which is perpendicular to said first direction, said third base leg (608) connecting said first base leg (604) to said second base leg (612);
a first end support (188) connected to said first base leg (604) and supporting said table top assembly (108);
a second end support (184) connected to said second base leg (612) and supporting said table top assembly (108), wherein said base portion (580, 912) further comprises a fourth base leg (1004) arranged in a second side region of said table saw system and extending in said first plane in said second direction, said fourth base leg (1004) connecting said first base leg (604) to said second base leg (612); wherein said support assembly further comprises a first junction member (618) connecting said first base leg (604) to said third base leg (608), a second junction member (620) connecting said first base leg (604) to said fourth base leg (1004), a third junction member (622) connecting said second base leg (612) to said third base leg (608), and a fourth junction member (616) connecting said second base leg (612) to said fourth base leg (1004), and
said first, second, third, and fourth junction members (616) extend out of the first plane and define a second plane on which said table saw system is configured to rest;
**characterised in that** said first end support (188) includes a handle element (636) arranged such that, when the table saw arrangement is situated on said second end support (184), a vertical axis of a center of mass of said table saw system passes through said handle element (636),
and **in that** the portable table saw system further comprises:
a first accessory (364) including a rip fence; and
a first accessory mount supported by said support assembly and configured to support said first accessory (364) in a stowed state of the table saw system, said first accessory mount being positioned within an internal volume defined by said support assembly and said table top assembly (108) in such a way that said first accessory (364) is located entirely within said internal volume when said first accessory (364) is mounted in said first accessory mount.

2. The portable table saw system of claim 1, wherein said first base leg (604), second base leg (612), third base leg (608), first end support (188), and second end support (184) are all integrally and monolithically formed of a single frame member (590).

3. The portable table saw system of claim 2, wherein said single frame member (590) comprises a bent tubular member.

4. The portable table saw system of claim 3, wherein:
said support arrangement (104, 504) includes an upper support formed integrally and monolithically with said first base leg (604), second base leg (612), third base leg (608), first end support (184), and second end support (184), and
said upper support is fixedly connected to said table top assembly (108) to support said table top assembly (108).

5. The portable table saw system of claim 2, wherein said base portion (580, 912) further comprises a rod member (624) connecting said first base portion (580, 912) to said second base portion (580, 912), and a diameter of said rod member (624) is less than a diameter of said single frame member (590).

6. The portable table saw system of claim 1, wherein said first end support (188) is arranged in a second plane, which is transverse to said first plane, and said second end support (184) is arranged in a third plane, which is perpendicular to said first plane.

7. The portable table saw system of claim 2, said support assembly further comprising:
a first junction member (618) attached at a connection between said first base leg (604) and said third base leg (608);
a second junction member (620) attached at a connection between said second base leg (612) and said third base leg (608);
a third junction member (622) attached at a connection between said first base leg (604) and said first support; and
a fourth junction member (616) attached at a connection between said second base leg (612) and said second support,
said first, second, third, and fourth junction members (616) extending out of the first plane and defining a second plane on which said table saw system is configured to rest.

8. The portable table saw system of claim 1, wherein said first end support (188) includes a first end support (184) member in said first side region and a second end support (184) member in said second side region, each of said first and second end support (184) members connecting said first base leg (604) to said table top assembly (108).

9. The portable table saw system of claim 8, wherein said second end support (184) includes a third end support member in said first side region and a fourth end support member in said second side region, each of said third and fourth support members connecting said second base leg (612) to said table top assembly (108).

10. The portable table saw system of claim 1, further comprising:
a second accessory (368);
a second accessory mount supported by said support assembly and configured to support said second accessory (368) in the stowed state of the table saw system, said second accessory mount being positioned within said internal volume in such a way that said second accessory (368) is located entirely within said internal volume when said second accessory (368) is mounted in said second accessory mount;
a third accessory (372); and
a third accessory mount supported by said support assembly and configured to support said third accessory (372) in the stowed state of the table saw system, said third accessory mount being positioned within said internal volume in such a way that said third accessory (372) is located entirely within said internal volume when said third accessory (372) is mounted in said third accessory mount.

11. The portable table saw system of claim 10, wherein said first accessory includes a rip fence, said second accessory (368) includes a saw blade guard (364; 724), and said third accessory (372) includes a miter gauge.

12. The portable table saw system of claim 1, wherein:
said support assembly further comprises a front plate member (664) arranged in said first side region, and
said front plate member (664) is fixedly connected to said third base leg (608) and to said table top assembly (108).

13. The portable table saw system of claim 12, wherein said front plate member (664) includes an outer covering formed of plastic and a reinforcing plate formed of metal.

## Patentansprüche

1. Tragbares Tischsägensystem, umfassend:
eine Tischoberflächenbaugruppe (108), die eine Werkstückstützfläche (536) aufweist und eine Sägeblattöffnung (532) definiert,
eine Sägebaugruppe (100), die unter der Tischoberflächenbaugruppe (108) gestützt ist und ein Sägeblatt (540) aufweist, das dazu ausgestaltet ist, sich durch die Sägeblattöffnung (532) zu erstrecken,
eine Stützanordnung (104, 504), die Folgendes umfasst:
einen Basisabschnitt (580, 912), der Folgendes aufweist: (i) einen ersten Basisschenkel (604), der an einem ersten Endbereich des Tischsägensystems angeordnet ist und sich in einer ersten Ebene in einer ersten Richtung erstreckt, (ii) einen zweiten Basisschenkel (612), der in einem zweiten gegenüberliegenden Endbereich des Tischsägensystems angeordnet ist und sich in der ersten Ebene in der ersten Richtung erstreckt, und (iii) einen dritten Basisschenkel (608), der in einem ersten Seitenbereich des Tischsägensystems angeordnet ist und sich in der ersten Ebene in einer verlaufenden zweiten Richtung erstreckt, wobei der dritte Basisschenkel (608) den ersten Basisschenkel (604) mit dem zweiten Basisschenkel (612) verbindet,
eine erste Endstütze (188), die mit dem ersten Basisschenkel (604) verbunden ist und die Tischoberflächenbaugruppe (108) stützt,
eine zweite Endstütze (184), die mit dem zweiten Basisschenkel (612) verbunden ist und die Tischoberflächenbaugruppe (108) stützt, wobei der Basisabschnitt (580, 912) ferner einen vierten Basisschenkel (1004) umfasst, der in einem zweiten Seitenbereich des Tischsägensystems angeordnet ist und sich in der ersten Ebene in der zweiten Richtung erstreckt, wobei der vierte Basisschenkel (1004) den ersten Basisschenkel (604) mit dem zweiten Basisschenkel (612) verbindet,
wobei die Stützbaugruppe ferner ein erstes Verbindungsglied (618), das den ersten Basisschenkel (604) mit dem dritten Basisschenkel (608) verbindet, ein zweites Verbindungsglied (620), das den ersten Basisschenkel (604) mit dem vierten Basisschenkel (1004) verbindet, ein drittes Verbindungsglied (622), das den zweiten Basisschenkel (612) mit dem dritten Basisschenkel (608) verbindet, und ein viertes Verbindungsglied (616), das den zweiten Basisschenkel (612) mit dem vierten Basisschenkel (1004) verbindet, wobei sich das erste, das zweite, das dritte und das vierte Verbindungsglied (616) aus der ersten Ebene herauserstrecken und eine zweite Ebene definieren, auf der das Tischsägensystem zum Ruhen ausgestaltet ist, **dadurch gekennzeichnet, dass** die erste Endstütze (188) ein Griffelement (636) aufweist, das so angeordnet ist, dass eine vertikale Achse eines Massenmittelpunkts des Tischsägensystems durch das Griffelement (636) verläuft, wenn sich die Tischsägenanordnung auf der zweiten Endstütze (184) befindet,
und dadurch, dass das tragbare Tischsägensystem ferner Folgendes umfasst:
ein erstes Zubehörteil (364), das einen Parallelanschlag aufweist, und
eine erste Zubehörteilhalterung, die von der Stützbaugruppe gestützt wird und dazu ausgestaltet ist, das erste Zubehörteil (364) in einem verstauten Zustand des Tischsägensystems zu stützen, wobei die erste Zubehörteilhalterung in einem Innenvolumen positioniert ist, das durch die Stützbaugruppe und die Tischoberflächenbaugruppe (108) definiert wird, so dass das erste Zubehörteil (364) vollständig in dem Innenvolumen angeordnet ist, wenn das erste Zubehörteil (364) in der ersten Zubehörteilhalterung montiert ist.

2. Tragbares Tischsägensystem nach Anspruch 1, wobei der erste Basisschenkel (604), der zweite Basisschenkel (612), der dritte Basisschenkel (608), die erste Endstütze (188) und die zweite Endstütze (184) alle integral und monolithisch aus einem einzigen Rahmenglied (590) gebildet sind.

3. Tragbares Tischsägensystem nach Anspruch 2, wobei das einzige Rahmenglied (590) ein gebogenes rohrförmiges Glied umfasst.

4. Tragbares Tischsägensystem nach Anspruch 3, wobei:
die Stützanordnung (104, 504) eine obere Stütze aufweist, die integral und monolithisch mit dem ersten Basisschenkel (604), dem zweiten Basisschenkel (612),
dem dritten Basisschenkel (608), der ersten Endstütze (184) und der zweiten Endstütze (184) ausgebildet ist, und
die obere Stütze fest mit der Tischoberflächenbaugruppe (108) verbunden ist, um die Tischoberflächenbaugruppe (108) zu stützen.

5. Tragbares Tischsägensystem nach Anspruch 2, wobei der Basisabschnitt (580, 912) ferner ein Stangenglied (624) umfasst, das den ersten Basisabschnitt (580, 912) mit dem zweiten Basisabschnitt (580, 912) verbindet, und ein Durchmesser des Stangenglieds (624) kleiner als ein Durchmesser des einzigen Rahmenglieds (590) ist.

6. Tragbares Tischsägensystem nach Anspruch 1, wobei die erste Endstütze (188) in einer zweiten Ebene angeordnet ist, die quer zu der ersten Ebene verläuft, und die zweite Endstütze (184) in einer dritten Ebene angeordnet ist, die senkrecht zu der ersten Ebene verläuft.

7. Tragbares Tischsägensystem nach Anspruch 2, wobei die Stützbaugruppe ferner Folgendes umfasst:
ein erstes Verbindungsglied (618), das an einer Verbindung zwischen dem ersten Basisschenkel (604) und dem dritten Basisschenkel (608) angebracht ist,
ein zweites Verbindungsglied (620), das an einer Verbindung zwischen dem zweiten Basisschenkel (612) und dem dritten Basisschenkel (608) angebracht ist,
ein drittes Verbindungsglied (622), das an einer Verbindung zwischen dem ersten Basisschenkel (604) und der ersten Stütze angebracht ist, und
ein viertes Verbindungsglied (616), das an einer Verbindung zwischen dem zweiten Basisschenkel (612) und der zweiten Stütze angebracht ist,
wobei sich das erste, das zweite, das dritte und das vierte Verbindungsglied (616) aus der ersten Ebene herauserstrecken und eine zweite Ebene definieren, auf der das Tischsägensystem zum Ruhen ausgestaltet ist.

8. Tragbares Tischsägensystem nach Anspruch 1, wobei die erste Endstütze (188) ein erstes Endstützenglied (184) in dem ersten Seitenbereich und ein zweites Endstützenglied (184) in dem zweiten Seitenbereich aufweist, wobei das erste und das zweite Endstützenglied (184) jeweils den ersten Basisschenkel (604) mit der Tischoberflächenbaugruppe (108) verbinden.

9. Tragbares Tischsägensystem nach Anspruch 8, wobei die zweite Endstütze (184) ein drittes Endstützenglied in dem ersten Seitenbereich und ein viertes Endstützenglied in dem zweiten Seitenbereich aufweist, wobei das dritte und das vierte Endstützenglied jeweils den zweiten Basisschenkel (612) mit der Tischoberflächenbaugruppe (108) verbinden.

10. Tragbares Tischsägensystem nach Anspruch 1, ferner umfassend:
ein zweites Zubehörteil (368),
eine zweite Zubehörteilhalterung, die von der Stützbaugruppe gestützt wird und dazu ausgestaltet ist, das zweite Zubehörteil (368) in dem verstauten Zustand des Tischsägensystems zu stützen, wobei die zweite Zubehörteilhalterung in dem Innenvolumen positioniert ist, so dass das zweite Zubehörteil (368) vollständig in dem Innenvolumen angeordnet ist, wenn das zweite Zubehörteil (368) in der zweiten Zubehörteilhalterung montiert ist,
ein drittes Zubehörteil (372) und
eine dritte Zubehörteilhalterung, die von der Stützbaugruppe gestützt wird und dazu ausgestaltet ist, das dritte Zubehörteil (372) in dem verstauten Zustand des Tischsägensystems zu stützen, wobei die dritte Zubehörteilhalterung in dem Innenvolumen positioniert ist, so dass das dritte Zubehörteil (372) vollständig in dem Innenvolumen angeordnet ist, wenn das dritte Zubehörteil (372) in der dritten Zubehörteilhalterung montiert ist.

11. Tragbares Tischsägensystem nach Anspruch 10, wobei das erste Zubehörteil einen Parallelanschlag aufweist, das zweite Zubehörteil (368) einen Sägeblattschutz (364; 724) aufweist und das dritte Zubehörteil (372) eine Gehrungslehre aufweist.

12. Tragbares Tischsägensystem nach Anspruch 1, wobei:
die Stützbaugruppe ferner ein vorderes Plattenglied (664) umfasst, das in dem ersten Seitenbereich angeordnet ist, und
das vordere Plattenglied (664) fest mit dem dritten Basisschenkel (608) und der Tischoberflächenbaugruppe (108) verbunden ist.

13. Tragbares Tischsägensystem nach Anspruch 12, wobei das vordere Plattenglied (664) eine aus Kunststoff ausgebildete äußere Abdeckung und eine aus Metall gebildete Verstärkungsplatte aufweist.

## Revendications

1. Système de scie circulaire à table portative comprenant :
un ensemble plateau de table (108) comprenant une surface de support de pièce à usiner (536) et
définissant une ouverture de lame de scie (532) ;
un ensemble scie (100) supporté sous ledit ensemble plateau de table (108) et comprenant une lame de scie (540) conçue pour s'étendre à travers ladite ouverture de lame de scie (532) ;
un agencement de support (104, 504) comprenant :
une partie de base (580, 912) comprenant (i) un premier pied de base (604) disposé au niveau d'une première région d'extrémité dudit système de scie circulaire à table et s'étendant dans un premier plan dans une première direction, (ii) un deuxième pied de base (612) disposé dans une seconde région d'extrémité opposée dudit système de scie circulaire à table et s'étendant dans ledit premier plan dans ladite première direction, et (iii) un troisième pied de base (608) disposé dans une première région latérale dudit système de scie circulaire à table et s'étendant dans ledit premier plan dans une seconde direction perpendiculaire à ladite première direction, ledit troisième pied de base (608) reliant ledit premier pied de base (604) audit deuxième pied de base (612) ;
un premier support d'extrémité (188) relié audit premier pied de base (604) et supportant ledit ensemble plateau de table (108) ;
un second support d'extrémité (184) relié audit deuxième pied de base (612) et supportant ledit ensemble plateau de table (108), ladite partie de base (580, 912) comprenant en outre un quatrième pied de base (1004) disposé dans une seconde région latérale dudit système de scie circulaire à table et s'étendant dans ledit premier plan dans ladite seconde direction, ledit quatrième pied de base (1004) reliant ledit premier pied de base (604) audit deuxième pied de base (612) ;
ledit ensemble support comprenant en outre un premier élément de jonction (618) reliant ledit premier pied de base (604) audit troisième pied de base (608), un deuxième élément de jonction (620) reliant ledit premier pied de base (604) audit quatrième pied de base (1004), un troisième élément de jonction (622) reliant ledit deuxième pied de base (612) audit troisième pied de base (608), et un quatrième élément de jonction (616) reliant ledit deuxième pied de base (612) audit quatrième pied de base (1004), et lesdits premier,
deuxième, troisième et quatrième éléments de jonction (616) s'étendant hors du premier plan et définissant un deuxième plan sur lequel ledit système de scie circulaire à table est conçu pour s'appuyer ;
**caractérisé en ce que** ledit premier support d'extrémité (188) comprend un élément poignée (636) disposé de sorte que, lorsque le système de scie circulaire à table est situé sur ledit second support d'extrémité (184), un axe vertical d'un centre de masse dudit système de scie circulaire à table passe à travers ledit élément poignée (636),
et **en ce que** le système de scie circulaire à table comprend en outre :
un premier accessoire (364) comprenant un guide longitudinal ; et
un premier élément de montage d'accessoire supporté par ledit ensemble support et conçu pour supporter ledit premier accessoire (364) dans un état rangé du système de scie circulaire à table, ledit premier élément de montage d'accessoire étant positionné à l'intérieur d'un volume interne défini par ledit ensemble support et ledit ensemble de plateau (108) de sorte que ledit premier accessoire (364) soit situé entièrement à l'intérieur dudit volume interne lorsque ledit premier accessoire (364) est monté dans ledit premier élément de montage d'accessoire.

2. Système de scie circulaire à table portative selon la revendication 1, lesdits premier pied de base (604), deuxième pied de base (612), troisième pied de base (608), premier support d'extrémité (188) et second support d'extrémité (184) étant tous formés d'un seul tenant et monolithiquement en un élément de cadre unique (590).

3. Système de scie circulaire à table portative selon la revendication 2, ledit élément de cadre unique (590) comprenant un élément tubulaire plié.

4. Système de scie circulaire à table portative selon la revendication 3,
ledit agencement de support (104, 504) comprenant un support supérieur formé d'un seul tenant et monolithiquement avec lesdits premier pied de base (604), deuxième pied de base (612), troisième pied de base (608), premier support d'extrémité (184), et second support d'extrémité (184), et
ledit support supérieur étant relié de manière fixe audit ensemble plateau de table (108) pour supporter ledit ensemble plateau de table (108).

5. Système de scie circulaire à table portative selon la revendication 2, ladite partie de base (580, 912) comprenant en outre un élément tige (624) reliant ladite première partie de base (580, 912) à ladite seconde partie de base (580, 912), et un diamètre dudit élément tige (624) étant inférieur à un diamètre dudit élément de cadre unique (590).

6. Système de scie circulaire à table portative selon la revendication 1, ledit premier support d'extrémité (188) étant disposé dans un deuxième plan, qui est transversal audit premier plan, et ledit second support d'extrémité (184) étant disposé dans un troisième plan, qui est perpendiculaire audit premier plan.

7. Système de scie circulaire à table portative selon la revendication 2, ledit ensemble support comprenant en outre :
un premier élément de jonction (618) fixé au niveau d'une liaison entre ledit premier pied de base (604) et ledit troisième pied de base (608) ;
un deuxième élément de jonction (620) fixé au niveau d'une liaison entre ledit deuxième pied de base (612) et ledit troisième pied de base (608) ;
un troisième élément de jonction (622) fixé au niveau d'une liaison entre ledit premier pied de base (604) et ledit premier support ; et
un quatrième élément de jonction (616) fixé au niveau d'une liaison entre ledit deuxième pied de base (612) et ledit second support,
lesdits premier, deuxième, troisième et quatrième éléments de jonction (616) s'étendant hors du premier plan et définissent un deuxième plan sur lequel ledit système de scie circulaire à table est conçu pour reposer.

8. Système de scie circulaire à table portative selon la revendication 1, ledit premier support d'extrémité (188) comprenant un premier élément de support d'extrémité (184) dans ladite première région latérale et un deuxième élément de support d'extrémité (184) dans ladite seconde région latérale, chacun desdits premier et deuxième éléments de support d'extrémité (184) reliant ledit premier pied de base (604) audit ensemble de plateau de table (108).

9. Système de scie circulaire à table portative selon la revendication 8, ledit second support d'extrémité (184) comprenant un troisième élément de support d'extrémité dans ladite première région latérale et un quatrième élément de support d'extrémité dans ladite deuxième région latérale, chacun desdits troisième et quatrième éléments de support reliant ledit deuxième pied de base (612) à l'ensemble plateau de table (108).

10. Système de scie circulaire à table portative selon la revendication 1, comprenant en outre :
un deuxième accessoire (368) ;
un deuxième élément de montage d'accessoire supporté par ledit ensemble support et conçu pour supporter ledit deuxième accessoire (368) à l'état rangé du système de scie circulaire à table, ledit deuxième élément de montage d'accessoire étant positionné à l'intérieur dudit volume interne de sorte que ledit deuxième accessoire (368) soit entièrement situé à l'intérieur dudit volume interne lorsque ledit deuxième accessoire (368) est monté dans ledit deuxième élément de montage d'accessoire ;
un troisième accessoire (372) ; et
un troisième élément de montage d'accessoire supporté par ledit ensemble support et conçu pour supporter ledit troisième accessoire (372) à l'état rangé du système de scie circulaire à table, ledit troisième élément de montage d'accessoire étant positionné à l'intérieur dudit volume interne de sorte que ledit troisième accessoire (372) se trouve entièrement à l'intérieur dudit volume interne lorsque ledit troisième accessoire (372) est monté dans ledit troisième élément de montage d'accessoire.

11. Système de scie circulaire à table portative selon la revendication 10, ledit premier accessoire comprenant un guide longitudinal, ledit deuxième accessoire (368) comprenant une protection de lame de scie (364 ; 724), et ledit troisième accessoire (372) comprenant un guide d'onglet.

12. Système de scie circulaire à table portative selon la revendication 1,
ledit ensemble support comprenant en outre un élément de plaque avant (664) disposé dans ladite première région latérale, et
ledit élément de plaque avant (664) étant relié de manière fixe audit troisième pied de base (608) et audit ensemble de plateau de table (108).

13. Système de scie circulaire à table portative selon la revendication 12, ledit élément de plaque avant (664) comprenant un revêtement extérieur formé de plastique et une plaque de renforcement formée de métal.
